# EUROPEAN PATENT APPLICATION

(11) **EP 4 668 762 A1**
(43) Date of publication of application: **24.12.2025**
(21) Application number: 24756216.8
(22) Date of filing: 07.02.2024
(51) Int. Cl.: H04N 21/4788

(54) **METHOD AND APPARATUS FOR LIVE STREAMING INTERACTION, AND DEVICE AND MEDIUM**

(30) Priority: 16.02.2023 CN 202310127115
(71) Applicant: Chengdu Guanghexinhao Technology Co., Ltd., Chengdu, Sichuan 610095 (CN)
(72) Inventor: WANG, Wenjun, Beijing 100028 (CN); WU, Hanfei, Beijing 100028 (CN); CHEN, Chen, Beijing 100028 (CN); LI, Qianwen, Beijing 100028 (CN)
(74) Representative: Marks & Clerk LLP
(86) International application number: PCT/CN2024/076582
(87) International publication number: WO 2024/169843

(57) **Abstract**

This application discloses a method and apparatus for live streaming interaction, a device, and a medium. A live streaming interface corresponding to a viewer side includes a first control. In response to a trigger operation of a user on the first control, a first interactive interface element is displayed, and the first interactive interface element displays at least one question option. In response to a selection operation triggered by the user for a first target question option from the at least one question option, the first target question option is sent to a live streaming room. Therefore, a question option to be asked may be selected from the first interactive interface element, and one-click sending is supported without manual input, thereby enhancing interaction experience.

## Description

This application claims priority to Chinese Patent Application No. 202310127115.6, entitled "METHOD AND APPARATUS FOR LIVE STREAMING INTERACTION, AND DEVICE AND MEDIUM", filed with the China National Intellectual Property Administration on February 16, 2023, the disclosure of which is incorporated herein by reference in its entirety.

### FIELD

The present application relates to the field of computer technology, and more specifically to a method, apparatus, device and medium for live interaction.

### BACKGROUND

With the continuous development of live streaming technology, an increasing number of users are experiencing interaction with streamers within live streaming rooms. However, current interaction methods are relatively limited, unable to satisfy diversified needs, thereby affecting user experience.

### SUMMARY

In view of this, embodiments of this application provide a method and apparatus for live streaming interaction, a device, and a medium, thereby facilitating viewers to ask questions, and enhancing usage experience of users.

To achieve the above objective, this application provides the following technical solutions.

In a first aspect, this application provides a method for live streaming interaction. The method includes:
displaying a live streaming interface, the live streaming interface including a first control;
displaying, in response to a trigger operation of a user on the first control, a first interactive interface element, the first interactive interface element displaying at least one question option; and
sending, in response to a selection operation of the user for a first target question option from the at least one question option, the first target question option.

In a second aspect, this application provides an apparatus for live streaming interaction. The apparatus includes:
a display unit, configured to display a live streaming interface, the live streaming interface including a first control,
the display unit being further configured to display, in response to a trigger operation of a user on the first control, a first interactive interface element, and the first interactive interface element displaying at least one question option; and
a sending unit, configured to send, in response to a selection operation of the user for a first target question option from the at least one question option, the first target question option.

In a third aspect, this application provides an electronic device. The device includes: a processor and a memory;
the memory is configured to store an instruction or a computer program; and
the processor is configured to execute the instruction or the computer program in the memory to cause the electronic device to perform the method in the first aspect.

In a fourth aspect, this application provides a computer-readable storage medium, having instructions stored therein. The instructions, when running on a device, cause the device to perform the method in the first aspect.

In a fifth aspect, this application provides a computer program product. The computer program product includes a computer program/instruction. The computer program/instruction, when executed by a processor, implements the method in the first aspect.

It is apparent that this application has the following beneficial effects:

In this application, the live streaming interface corresponding to a viewer side includes the first control. In response to the trigger operation of the user on the first control, the first interactive interface element is displayed, and displays the at least one question option. In response to the selection operation triggered by the user for the first target question option from the at least one question option, the first target question option is sent to the live streaming room. Namely, when a viewer wants to ask a question to a streamer, a question option to be asked may be selected from the first interactive interface element, and one-click sending is supported without manual input, thereby enhancing interaction experience.

### BRIEF DESCRIPTION OF THE DRAWINGS

In order to describe technical solutions in the embodiments of this application or in the prior art more clearly, the accompanying drawings required to be used in the descriptions of the embodiments or the prior art will be briefly introduced below, it is apparent that the accompanying drawings described below are only some embodiments recorded in this application, and those of ordinary skill in the art can obtain other accompanying drawings according to these accompanying drawings without creative work.
FIG. 1 is a flowchart of a method for live streaming interaction according to an embodiment of this application;
FIG. 2a is a schematic diagram of the display of a first control according to an embodiment of this application;
FIG. 2b is a schematic diagram of the display of another first control according to an embodiment of this application;
FIG. 2c is a schematic diagram of the display of a first interactive interface element according to an embodiment of this application;
FIG. 2d is a schematic diagram of the display of another first interactive interface element according to an embodiment of this application;
FIG. 3a is a schematic diagram of the display of a second interactive interface element according to an embodiment of this application;
FIG. 3b is a schematic diagram of the display of another second interactive interface element according to an embodiment of this application;
FIG. 4a is a schematic diagram of the display of a target area according to an embodiment of this application;
FIG. 4b is a schematic diagram of the display of a third interactive interface element according to an embodiment of this application;
FIG. 5 is a schematic diagram of a structure of an apparatus for live streaming interaction according to an embodiment of this application; and
FIG. 6 is a schematic diagram of a structure of an electronic device according to an embodiment of this application.

### DETAILED DESCRIPTION OF EMBODIMENTS

In order to make those skilled in the art better understand the solutions of this application, the technical solutions in the embodiments of this application are clearly and completely described in combination with the accompanying drawings in the embodiments of this application as below, and it is apparent that the described embodiments are merely a part rather all embodiments of this application. All other embodiments obtained by those of ordinary skill in the art based on the embodiments of this application without creative efforts shall fall within the scope of protection of this application.

Currently, in a live streaming process, when viewers want to ask questions to a streamer, the viewers need to send the questions to a streamer end by inputting comments edited through texts or audio, thereby facilitating the streamer to provide answers after seeing the questions. However, the method for asking questions is complex and inefficient, affecting user experience. In addition, when there are a large number of comments in a live streaming room, it is difficult for the streamer to quickly notice the questions asked by the viewers among the numerous comments, making it inefficient to provide targeted answers.

Based on this, this application provides a method for live streaming interaction. After a user enters the live streaming room, a first control may be displayed on a live streaming interface. In response to a trigger operation of the user on the first control, a first interactive interface element is displayed and displays at least one question option, and the user may select the question option to be asked according to needs. In response to a selection operation of the user for a first target question option, the first target question option is sent, thereby allowing the streamer to view the first target question option through the live streaming room at the streamer end. Namely, according to this application, the at least one question option for the user to select may be generated. When the user wants to ask a question in the live streaming room, the user may directly select a needed question option from the at least one question option for sending without manual input, thereby improving enthusiasm for interaction.

It should be understood that before the use of the technical solutions of the embodiments of the present disclosure, the user shall be informed of the type, range of use, use scenarios, etc., of involved personal information in an appropriate manner in accordance with relevant laws and regulations, and the authorization of the user shall be obtained.

For example, in response to the reception of an active request from the user, prompt information is sent to the user to clearly indicate the user that it is necessary to obtain and use the personal information of the user for the operation requested to be performed. Therefore, the user may freely select, according to the prompt information, whether to provide the personal information for software or hardware such as an electronic device, an application, a server, or a storage medium performing the operations of the technical solutions of the present disclosure.

As an optional but non-limiting implementation, in response to the reception of the active request from the user, the prompt information may be sent to the user in the form of, for example, a pop-up window, in which the prompt information may be presented in text. Further, the pop-up window may also carry a selection control for the user to choose whether to "agree" or "disagree" to provide the personal information to the electronic device.

It should be understood that the above notification and user authorization obtaining process is only illustrative, which does not limit the implementations of the present disclosure, and other methods that comply with the relevant laws and regulations may also be applied to the implementations of the present disclosure.

To facilitate the understanding of the technical solutions according to the embodiments of this application, the description is made below in combination with the accompanying drawings.

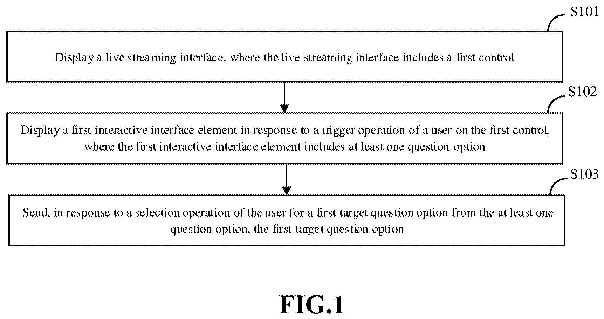

Referring to FIG. 1, the figure is a flowchart of a method for live streaming interaction according to an embodiment of this application. The method may be performed by a live streaming client. The live streaming client may be a live streaming client corresponding a viewer side, and may be installed in an electronic device. The electronic device may include a mobile phone, a tablet computer, a notebook computer, a desktop computer, a vehicle terminal, a wearable electronic device, an all-in-one machine, a smart home device, and other devices with a communication function, or may also be a device simulated by a virtual machine or an emulator. As shown in FIG. 1, the method may include the following steps:
S101: Display a live streaming interface, where the live streaming interface includes a first control.

In this embodiment, after a viewer enters a certain live streaming room through the live streaming client, the live streaming interface is displayed. The live streaming interface includes the first control, and the first control is used to trigger the display of question options. Specifically, the first control may be a question and answer button or a question button.

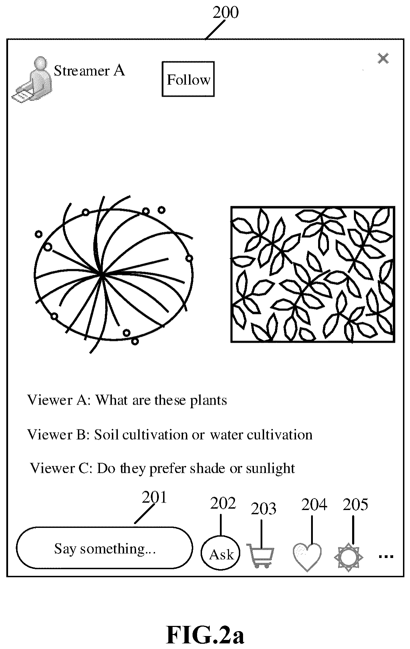

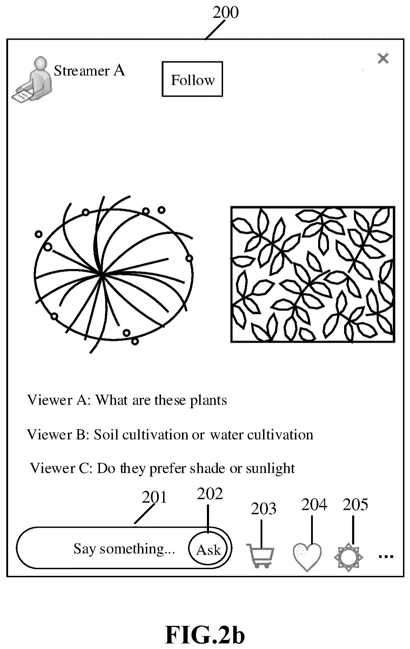

The live streaming interface may also include a comment control used to send comments. To facilitate the user to rapidly browse the first control, the first control may be displayed at a position associated with the comment control. For example, the first control may be adjacent to the comment control. As shown in FIG. 2a, for example, a live streaming scene 200 is a live streaming scene where a streamer sells products, the live streaming scene 200 includes a comment control 201, as well as a first control 202, a shopping cart control 203, a like control 204, and a gift control 205 which are arranged on a right side of the comment control 201. The shopping cart control 203 is used to trigger the display of a list of products promoted in the live streaming room. The like control 204 is used for the viewer to trigger a like. The gift control 205 is used for the viewer to trigger sending a virtual gift to the streamer. Alternatively, the first control may be located within the comment control, and as shown in FIG. 2b, the first control 202 is displayed within the comment control 201.

S102: Display a first interactive interface element in response to a trigger operation of the user on the first control.

In response to the trigger operation of the user on the first control, the first interactive interface element is displayed on the live streaming interface, and includes at least one question option, where the at least one question option is different question options for reflecting the requirements of the user. When different users enter the same live streaming room, the question options displayed on the corresponding first interactive interface elements may be different, thereby satisfying diverse requirements and enhancing usage experience of the users. The first interactive interface element may be a pop-up window, an interface, a panel, a floating layer, or the like.

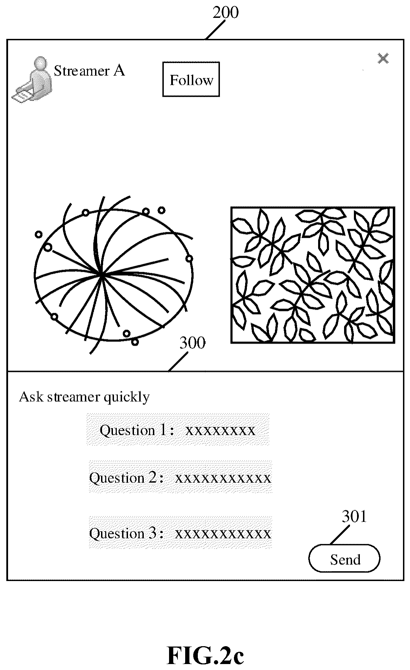

For example, as shown in FIG. 2c, when the user triggers the first control 202 in FIG. 2a or FIG. 2b, a first interactive interface element 300 is displayed and may include a question option 1, a question option 2, and a question option 3. The three question options are different types of question options, which may be specifically different types of question options associated with the live stream, to reflect requirements from different aspects.

In an embodiment, the at least one question option displayed on the first interactive interface element may include a question option determined based on a region, a question option determined based on a live streaming room type, or a question option determined based on live streaming content of a live streaming room. In a case that the least one question option includes the question option determined based on the region, the question option may be, for example, "Is Region A fun?". In a case that the least one question option includes the question option determined based on the live streaming room type or the live streaming content of the live streaming room, and the live streaming room is a singing live streaming room or the live streaming content includes song content, the question option may be, for example, "What is the name of Song X?".

In an embodiment, the at least one question option may include a resource recommendation question option, and resources may be virtual or physical items, services, etc. Correspondingly, the at least one question option may be different types of question options associated with the resources, such as question options corresponding to different attributes of the resources, like usage attributes and functional attributes of the resources.

In an embodiment, the at least one question option includes a resource recommendation question option determined based on an region, a resource recommendation question option determined based on a live streaming room type, or a resource recommendation question option determined based on content of a live streaming room.

In a case that the least one question option includes the resource recommendation question option determined based on the region, the resource recommendation may be, for example, a food recommendation, and the question option may be, for example, "What are the delicious foods of Region A?".

In an embodiment, when the at least one question option includes the resource recommendation question option, the resource recommendation question option may be a question option related to a target category resource, and/or a question option related to a target attribute resource under a target category. The target category may refer to a target kind/ type, and a corresponding target category resource may refer to a resource of the target kind/type. The resource may be a food resource or a clothing resource. When the resource is the food resource, the target category may be hot pot, etc. When the resource is the clothing resource, the target category may refer to tops, pants, etc. in a clothing category. A target attribute is a certain attribute under the target category. For example, when the target category is tops, the target attribute may be pure cotton, wool, nylon, etc., in terms of material, though not limited to these. In addition, the question option may be a question option corresponding to the user, which may be specifically determined through a questioning condition in the live streaming room.

The question option may be determined through the live streaming client, or the server. After the user triggers the first control, the live streaming client sends a request to the server, so that the question option displayed on the first interactive interface element is acquired through the request. The server determines the corresponding question option according to the request.

S103: Send, in response to a selection operation of the user for a first target question option from the at least one question option, the first target question option.

After the first interactive interface element is displayed on the live streaming interface, the user may select the question option to be asked from the first interactive interface element. In response to the selection operation of the user, the selected first target question option is sent to the live streaming room. The sent first target question option or a question corresponding to the first target question option may be displayed on the live streaming interface, so that other viewers and the streamer in the live streaming room can browse the sent first target question option, thereby facilitating the streamer to respond to the question option.

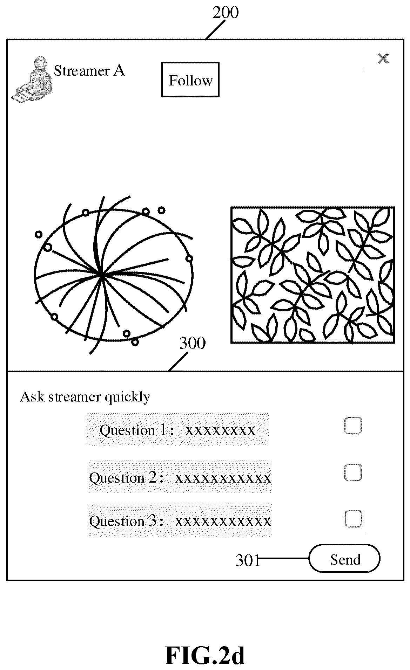

The user may select one question option or a plurality of question options at a time from the first interactive interface element, which is not limited in this embodiment. For example, as shown in FIG. 2d, in the first interactive interface element 300, each question option may correspond to one checkbox, and the question option to be asked may be selected by tapping the checkbox. After selection is complete, a sending control 301 is tapped to display the sent question on the live streaming interface corresponding to the viewer side and the live streaming interface corresponding to a streamer side.

In an embodiment, the step of sending the first target question option may include sending the first target question option to the streamer end (specifically, first sending the first target question option to the server, and then sending the first target question option to the streamer end via the server), so that the first target question option and/or prompt information related to the first target question option may be displayed at the streamer end. The prompt information may be information that prompts the streamer of the existence of a question related to the first target question option. In an embodiment, at least one prompt piece of information may also be displayed on the live streaming interface corresponding to the streamer according to the frequency of the question options asked in the live streaming room. During implementation, at least one piece of prompt information may be determined according to the question option that has been asked in the live streaming room with an occurrence frequency greater than a preset occurrence threshold, to prompt the streamer to respond as soon as possible. For example, the preset occurrence frequency is a, and when the first target question option has been asked by b times (b is greater than a), "Everyone is asking about the first target question option" is displayed at the streamer end.

It can be seen that the live streaming interface corresponding to the viewer side includes the first control. In response to the trigger operation of the user on the first control, the first interactive interface element is displayed, and displays the at least one question option. In response to the selection operation triggered by the user for the first target question option from the at least one question option, the selected first target question option is sent to the live streaming room. Namely, when a viewer wants to ask a question to the streamer, the question to be asked may be selected from the first interactive interface element, and one-click sending is supported without manual input, thereby enhancing the interactivity and usage experience between the viewer and the streamer.

In some implementations, when the live streaming room is used to introduce resources, the live streaming interface may also include a second control. The method further includes: displaying a second interactive interface element in response to a trigger operation of the user on the second control, where the second interactive interface element displays a target identifier; and displaying a first resource related to the first target question option on the second interactive interface element in response to a trigger operation of the user on the target identifier. The second interactive interface element is used to display a resource collection associated with the live streaming room.

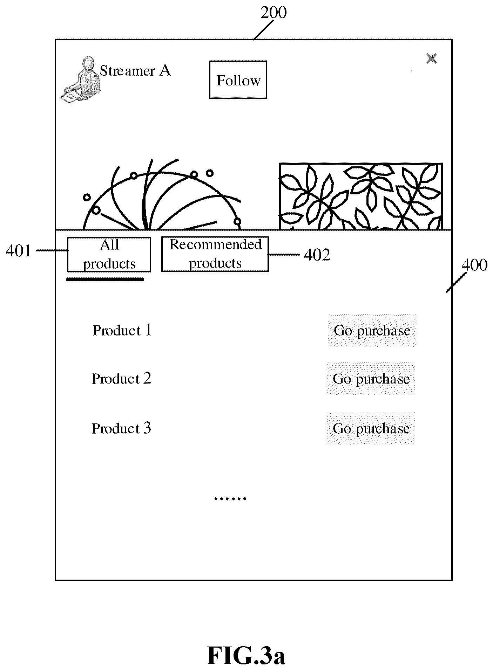

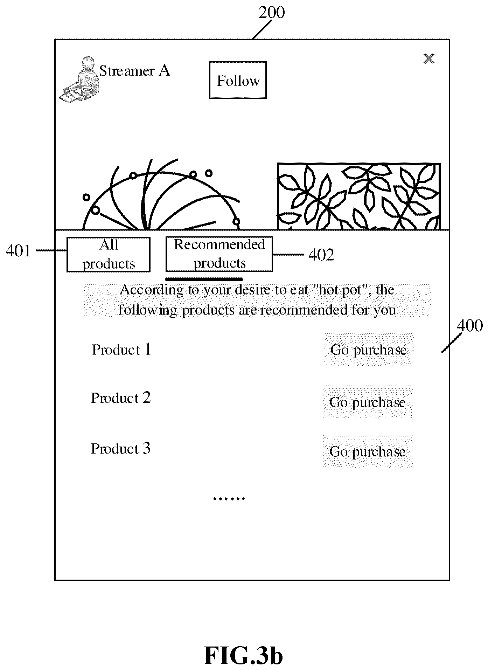

For example, in an e-commerce scenario, the second control is the shopping cart control 203 in FIG. 2a or FIG. 2b. When the user triggers the shopping cart control 203, the second interactive interface element 400 is displayed, which is a product list as shown in FIG. 3a. The second interactive interface element 400 displays a first identifier 401 and a second identifier 402 (the target identifier). When entering the second interactive interface element 400, first product information corresponding to the first identifier 401 may be displayed. The first product information may be, for example, product information from the product list associated with the live streaming room. The product information may include product descriptions and purchase controls. The user may perform switching between the first identifier and the second identifier, thereby switching content displayed on the second interactive interface element. After the user selects the second identifier 402, second product information is displayed on the second interactive interface element 400, and the second product information may be, for example, product information of a product list associated with the question option selected to be sent. For example, as shown in FIG. 3b, the question option asked by the user is "Do you have any recommendations for hot pots?". After the user asks the question, if the second identifier is triggered, the second interactive interface element 400 displays products related to the asked question option "Do you have any recommendations for hot pots?", such as recommended hot-pot-related products. The first identifier is used to display the resource collection associated with the live streaming room in a case of receiving a trigger, which may be a complete resource collection corresponding to a current live stream. The second identifier is used to display a resource collection corresponding to the question option sent by the user in a case of receiving the trigger. The second interactive interface element may be a pop-up window, a panel, a page, an overlay, etc.

In some implementations, if the user selects a plurality of different question options to ask from the first interactive interface element, resources may be displayed through the following methods:
One method is to display a resource corresponding to the most recently sent question option on the second interactive interface element. Specifically, after the first target question option is sent, the selection operation triggered by the user for a second target question option from the at least one question option is received, the first resource displayed on the second interactive interface element is updated to a second resource related to the second target question option, thereby allowing the user to rapidly browse the resource corresponding to the most recently ask question option.

Another method is for the resource displayed on the second interactive interface element to satisfy products indicated by a plurality of different question options. Specifically, after the first target question option is sent, the selection operation of the user for the second target question option from the at least one question option is received, and the second resource related to the second target question option may be displayed on the second interactive interface element in an overlaid manner. Namely, the second interactive interface element displays the first resource and the second resource.

The step of displaying the second resource on the second interactive interface element in the overlaid manner may include the following cases: one case is to simultaneously display the first resource and the second resource on the second interactive interface element. For example, if the question options selected by the user through the first interactive interface element are respectively "Do you have any recommendations for hot pots" and "Do you have any spicy food recommendations", the second interactive interface element displays products corresponding to "spicy hot pots." The other case is to display a first sub-identifier and a second sub-identifier on the second interactive interface element, and the first sub-identifier and the second sub-identifier may be sub-identifiers associated with the second identifier (the target identifier). The first sub-identifier corresponds to the first target question option, and the second sub-identifier corresponds to the second target question option. When the first sub-identifier is in a selected state, the second interactive interface element displays the first resource; and in response to a trigger operation of the user on the second sub-identifier, the second resource is displayed on the second interactive interface element. When the second sub-identifier is in a selected state, the second interactive interface element displays the second resource; and in response to a trigger operation of the user on the first sub-identifier, the second resource is displayed on the second interactive interface element. Namely, the user may view resources corresponding to different sub-identifiers by switching the sub-identifiers. For example, if the question options selected by the user through the first interactive interface element are respectively "Do you have any recommendations for hot pots" and "Do you have any spicy food recommendations", in response to the trigger operation of the user on the target identifier, the sub-identifier 1 and the sub-identifier 2 are displayed on the second interactive interface element, and when the user selects the sub-identifier 1, the second interactive interface element displays products related to "hot pots," and when the user selects the sub-identifier 2, the second interactive interface element displays products related to "spicy".

In practical applications, new viewers constantly enter the live streaming room and may ask repeated questions, requiring the streamer to repeatedly answer the questions. To solve the above problems, this embodiment provides a method. Specifically, a target area is displayed on a live streaming scene. The target area is located outside a public screen area of the live streaming interface, and displays sent question options corresponding to the live streaming room that satisfy preset conditions (the sent question options are question options selected and sent by the user to the live streaming room), as well as answers (e.g., the frequently asked question options and the answers). The preset conditions may be set according to practical application situations, such as the most recently sent question option and the answer, or the most frequently sent question option and the answer.

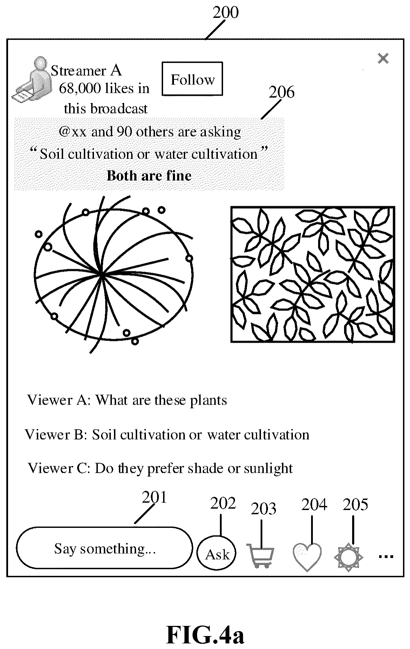

In an embodiment, content displayed in the target area may be updated according to a real-time scrolling manner to display different question options and the answers corresponding to the different question options, thereby facilitating the viewers to understand the situation without repeated asking or repeated answering, to reduce the workload of the streamer. The target area may be displayed in the live streaming interface in the form of a card. For example, as shown in FIG. 4a, the live streaming interface 200 includes the target area 206, and information such as specific question options, answers corresponding to the question options, and the frequency of asking may be displayed on the target area 206.

In some implementations, to further facilitate the viewers to check more historical question options and answers, a third interactive interface element is displayed in response to the trigger operation of the user on the target area. The third interactive interface element is used to display all sent question options and answers corresponding to the live streaming room. The third interactive interface element may be displayed on the live streaming interface in the form of a pop-up window, a floating layer, a panel, and an interface.

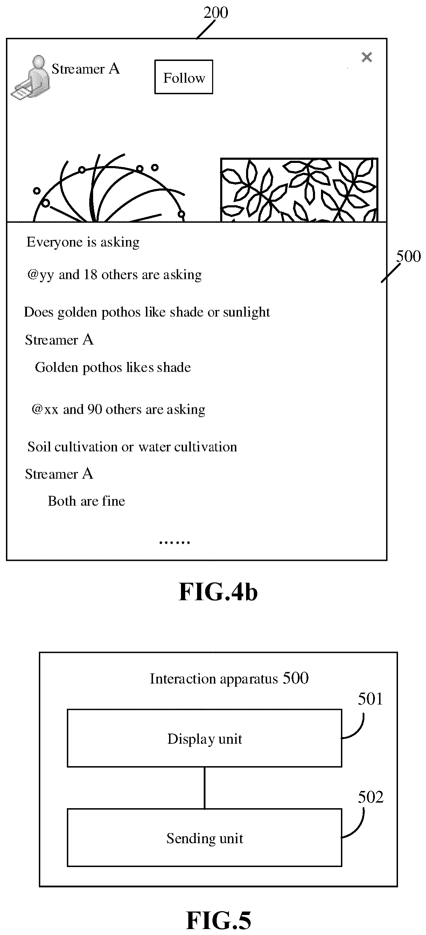

For example, as shown in FIG. 4b, in response to the trigger operation of the user on the target area 206 in FIG. 4a, the third interactive interface element 500 is displayed, and a plurality of asked question options, answer content corresponding to each question option, and an asking frequency corresponding to each question option may be displayed on the third interactive interface element 500.

Based on the above method embodiment, an embodiment of this application provides an apparatus for live streaming interaction, and an electronic device, which will be described below in combination with the accompanying drawings.

Referring to FIG. 5, the figure is a schematic diagram of a structure of an apparatus for live streaming interaction according to an embodiment of this application. As shown in FIG. 5, the apparatus 500 may include: a display unit 501 and a sending unit 502.

The display unit 501 is configured to display a live streaming interface, where the live streaming interface includes a first control, and
the display unit 501 is further configured to display, in response to a trigger operation of a user on the first control, a first interactive interface element, and the first interactive interface element displays at least one question option; and
the sending unit 502 is configured to send, in response to a selection operation of the user for a first target question option from the at least one question option, the first target question option.

In some implementations, the live streaming interface further includes a comment control, and the first control is displayed at an associated position of the comment control.

In some implementations, the at least one question option includes one or more of the following:
a question option determined based on a region, a question option determined based on a live streaming room type, and a question option determined based on content of a live streaming room.

In some implementations, the at least one question option includes a resource recommendation question option.

In some implementations, the live streaming interface includes a second control. The display unit 501 is further configured to display a second interactive interface element in response to a trigger operation of the user on the second control, where the second interactive interface element displays a target identifier; and display, in response to a trigger operation of the user on the target identifier, a first resource related to the first target question option on the second interactive interface element.

In some implementations, a receiving unit and an update unit are further included.

The receiving unit is configured to receive a selection operation of the user on a second target question option from the at least one question option; and
the update unit is configured to update, in response to the selection operation of the user on the second target question option from the at least one question option, the first resource displayed on the second interactive interface element to a second resource related to the second target question option, or display the second resource in an overlaid manner.

In some implementations, the update unit is specifically configured to display a first sub-identifier and a second sub-identifier on the second interactive interface element, where the first sub-identifier corresponds to the first target question option, and the second sub-identifier corresponds to the second target question option; display the first resource on the second interactive interface element when the first sub-identifier is in a selected state; display the second resource on the second interactive interface element in response to a trigger operation of the user on the second sub-identifier; display the second resource on the second interactive interface element when the second sub-identifier is in a selected state; and display the second resource on the second interactive interface element in response to a trigger operation of the user on the first sub-identifier.

In some implementations, the live streaming interface includes a public screen area and a target area. The target area is located outside the public screen area, and the target area displays sent question options corresponding to the live streaming room that satisfy preset conditions, as well as answers. The display unit 501 is further configured to display a third interactive interface element in response to a trigger operation of the user on the target area, where the third interactive interface element displays all sent question options and answers corresponding to the live streaming room.

In some implementations, the sending unit 502 is specifically configured to send the first target question option to a streamer end to display the first target question option and/or prompt information related to the first target question option at the streamer end.

It should be noted that for the specific implementation of each unit in this embodiment, reference may be made to the relevant descriptions in the above method embodiments. The division of units in this embodiment of this application is schematic and merely represents a logical function division, and there may be additional division methods in actual implementation. Functional units in the embodiments of this application may be integrated into a processing unit, or the units may exist physically separately, or two or more units may be integrated into a unit. For example, in the above embodiment, the processing unit and the sending unit may be the same unit or different units. The above integrated unit may be implemented in the form of hardware or a software functional unit.

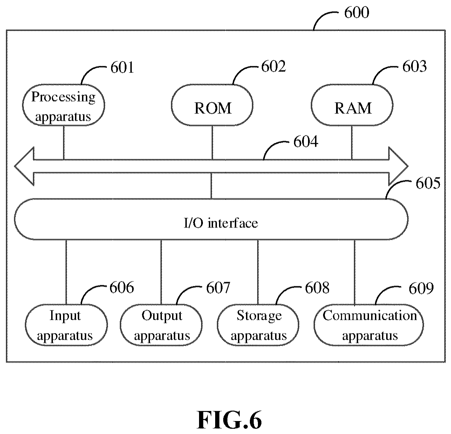

Reference is made to FIG. 6, which is a schematic diagram of a structure of an electronic device 600 suitable for implementing an embodiment of the present disclosure. A terminal device in this embodiment of the present disclosure may include, but is not limited to, mobile terminals such as a mobile phone, a notebook computer, a digital broadcast receiver, a personal digital assistant (PDA), a portable Android device (PAD), a portable media player (PMP), and a vehicle-mounted terminal (e.g., a vehicle navigation terminal), and fixed terminals such as a digital TV and a desktop computer. The electronic device shown in FIG. 6 is merely an example, and shall not impose any limitation on the function and scope of use of the embodiments of the present disclosure.

As shown in FIG. 6, the electronic device 600 may include a processing apparatus (e.g., a central processing unit and a graphics processing unit) 601, which may perform various suitable actions and processing according to a program stored on a read-only memory (ROM) 602 or a program loaded from a storage apparatus 608 into a random access memory (RAM) 603. The RAM 603 further stores various programs and data required for operations of the electronic device 600. The processing apparatus 601, the ROM 602, and the RAM 603 are connected to one another through a bus 604. An input/output (I/O) interface 605 is also connected to the bus 604.

Typically, the following apparatuses may be connected to the I/O interface 605: an input apparatus 606 including, for example, a touchscreen, a touchpad, a keyboard, a mouse, a camera, a microphone, an accelerometer, and a gyroscope; an output apparatus 607 including, for example, a liquid crystal display (LCD), a speaker, and a vibrator; the storage apparatus 608 including, for example, a magnetic tape and a hard drive; and a communication apparatus 609. The communication apparatus 609 may allow the electronic device 600 to be in wireless or wired communication with other devices for data exchange. Although FIG. 6 shows the electronic device 600 having various apparatuses, it should be understood that it is not required to implement or have all of the shown apparatuses. It may be an alternative to implement or have more or fewer apparatuses.

In particular, the above process described with reference to the flowcharts according to the embodiments of the present disclosure may be implemented as a computer software program. For example, an embodiment of the present disclosure includes a computer program product, which includes a computer program carried on a non-transitory computer-readable medium, where the computer program includes program code for performing the method shown in the flowchart. In this embodiment, the computer program may be downloaded and installed from the network through the communication apparatus 609, or installed from the storage apparatus 608, or installed from the ROM 602. The computer program, when executed by the processing apparatus 601, performs the above functions limited in the method in this embodiment of the present disclosure.

The electronic device according to this embodiment of the present disclosure and the method according to the above embodiment belong to the same inventive concept, and for technical details not described in detail in this embodiment, reference may be made to the above embodiment. This embodiment and the above embodiment have the same beneficial effects.

An embodiment of the present disclosure provides a computer storage medium, having a computer program stored therein. The program, when executed by a processor, implements the method according to the above embodiment.

It should be noted that the above computer-readable medium in the present disclosure may be either a computer-readable signal medium or a computer-readable storage medium, or any combination of the two. The computer-readable storage medium may be, for example, but is not limited to, electric, magnetic, optical, electromagnetic, infrared, or semiconductor systems, apparatuses, or devices, or any combination of the above. More specific examples of the computer-readable storage medium may include, but are not limited to: an electrical connection with one or more wires, a portable computer disk, a hard drive, a random access memory (RAM), a read-only memory (ROM), an erasable programmable read-only memory (EPROM or a flash memory), an optical fiber, a portable compact disk read-only memory (CD-ROM), an optical storage device, a magnetic storage device, or any suitable combination of the above. In the present disclosure, the computer-readable storage medium may be any tangible medium including or storing a program, and the program may be for use by or for use in combination with an instruction execution system, apparatus, or device. However, in the present disclosure, the computer-readable signal medium may include a data signal propagated in a baseband or as a part of a carrier, where the data signal carries computer-readable program code. The propagated data signal may take various forms, including but not limited to, an electromagnetic signal, an optical signal, or any suitable combination of the above. The computer-readable signal medium may further be any computer-readable medium other than the computer-readable storage medium. The computer-readable signal medium may send, propagate, or transmit a program for use by or for use in combination with the instruction execution system, apparatus, or device. The program code included in the computer-readable medium may be transmitted by any suitable medium, including but not limited to a wire, an optical cable, radio frequency (RF), etc., or any suitable combination of the above.

In some implementations, a client and a server may communicate using any currently known or future-developed network protocols such as a hyper text transfer protocol (HTTP), and may also be interconnected with digital data communication in any form or medium (e.g., a communication network). Examples of the communication network include a local area network ("LAN"), a wide area network ("WAN"), an internetwork (e.g., the Internet), a peer-to-peer network (e.g., an ad hoc peer-to-peer network), and any currently known or future-developed network.

The above computer-readable medium may be included in the above electronic device; or may also separately exist without being assembled in the electronic device.

The above computer-readable medium carries one or more programs. The above one or more programs, when executed by the electronic device, cause the electronic device to perform the above method.

Computer program code for performing operations of the present disclosure may be written in one or more programming languages or a combination thereof, where the above programming languages include, but are not limited to, object-oriented programming languages, such as Java, Smalltalk, and C++, and further include conventional procedural programming languages, such as "C" language or similar programming languages. The program code may be executed entirely on a user computer, partly on the user computer, as a stand-alone software package, partly on the user computer and partly on a remote computer, or entirely on the remote computer or the server. In the case of the remote computer, the remote computer may be connected to the user computer through any kind of network, including a local area network (LAN) or a wide area network (WAN), or may be connected to an external computer (e.g., connected through the Internet with the aid of an Internet service provider).

The flowchart and the block diagram in the accompanying drawings illustrate the possibly implemented system architecture, functions, and operations of the system, the method, and the computer program product according to various embodiments of the present disclosure. In this regard, each block in the flowchart or the block diagram may represent a module, a program segment, or a part of code, and the module, the program segment, or the part of code contains one or more executable instructions for implementing specified logical functions. It should also be noted that in some alternative implementations, the functions marked in the blocks may also occur in an order different from that marked in the accompanying drawings. For example, two blocks shown in succession may actually be performed substantially in parallel, or may sometimes be performed in a reverse order, depending on the functions involved. It should also be noted that each block in the block diagrams and/or the flowcharts, and a combination of the blocks in the block diagrams and/or the flowcharts may be implemented using a dedicated hardware-based system that performs specified functions or operations, or may be implemented using a combination of dedicated hardware and computer instructions.

The involved units described in the embodiments of the present disclosure may be implemented through software or hardware. The name of the unit/module does not constitute a limitation on the unit itself under certain circumstances.

Herein, the functions described above may be performed at least partially by one or more hardware logic components. For example, without limitation, exemplary hardware logic components that can be used include: a field-programmable gate array (FPGA), an application specific integrated circuit (ASIC), an application specific standard product (ASSP), a system on chip (SOC), a complex programmable logic device (CPLD), etc.

In the context of the present disclosure, a machine-readable medium may be a tangible medium that may include or store a program for use by or for use in combination with the instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination of the above content. More specific examples of the machine-readable storage medium may include an electrical connection based on one or more wires, a portable computer disk, a hard drive, a random access memory (RAM), a read-only memory (ROM), an erasable programmable read-only memory (EPROM or a flash memory), an optical fiber, a portable compact disk read-only memory (CD-ROM), an optical storage device, a magnetic storage device, or any suitable combination of the above content.

It should be noted that the various embodiments in the specification are described in a progressive manner, highlighting the differences between each embodiment and the other embodiments. The similar or identical parts between different embodiments may be cross-referenced to each other. For the system or the apparatus disclosed in this embodiment, since it corresponds to the method disclosed in the embodiments, the description is relatively simple, and for the related parts, reference may be made to the partial description of the method.

It should be understood that in this application, "at least one" means one or more, and "a plurality of" means two or more. The term "and/or" is an association relationship for describing associated objects, indicating that there may be three relationships. For example, "A and/or B" may represent three situations: A exists alone, B exists alone, and both A and B exist, where A and B may be singular or plural. The character "/" generally indicates an "or" relationship between preceding and succeeding associated objects. "At least one of the following items" or similar expressions refer to any combination of these items, including any combination of single or plural items. For example, at least one of a, b, or c may represent: a, b, c, "a and b", "a and c", "b and c", or "a, b, and c", where a, b, and c may be single or plural.

It should be further noted that herein, relational terms such as first and second are used only to distinguish one entity or operation from another and do not necessarily require or imply any actual relationship or order between these entities or operations. Moreover, the terms "include", "contain", or any of their variants is intended to cover a non-exclusive inclusion, such that a process, a method, an article, or a device that includes a list of elements not only includes those elements but also includes other elements that are not expressly listed, or further includes elements inherent to such process, method, article, or device. In the absence of more restrictions, an element defined by the phrase "including a ..." does not exclude another identical element in the process, the method, the article, or the device that includes the element.

The steps of the method or the algorithm described in combination with the embodiments disclosed herein may be implemented directly in hardware, in a software module executed by a processor, or in a combination of the two. The software module may be arranged in a random access memory (RAM), an internal memory, a read-only memory (ROM), an electrically programmable ROM, an electrically erasable programmable ROM, a register, a hard drive, a removable disk, a CD-ROM, or any other form of storage medium known in the art.

Those skilled in the art can implement or use this application according to the above descriptions of the disclosed embodiments. Various modifications to these embodiments are apparent to those skilled in the art, and the general principle defined herein may be implemented in other embodiments without departing from the spirit or scope of this application. Therefore, this application will not be limited to the embodiments shown herein but needs to conform to a widest scope consistent to the principles and novel characteristics disclosed herein.

## Claims

1. A method for live streaming interaction, comprising:
displaying a live streaming interface, the live streaming interface comprising a first control;
displaying, in response to a trigger operation of a user on the first control, a first interactive interface element, the first interactive interface element displaying at least one question option; and
sending, in response to a selection operation of the user for a first target question option from the at least one question option, the first target question option.

2. The method according to claim 1, wherein the live streaming interface further comprises a comment control, and the first control is displayed at a position associated with the comment control.

3. The method according to claim 1, wherein the at least one question option comprises one or more of:
a question option determined based on a region, a question option determined based on a live streaming room type, and a question option determined based on content of a live streaming room.

4. The method according to claims 1 to 3, wherein the at least one question option comprises a resource recommendation question option.

5. The method according to claim 1, wherein the live streaming interface comprises a second control, and the method further comprises:
displaying a second interactive interface element in response to a trigger operation of the user on the second control, a target identifier being displayed on the second interactive interface element; and
displaying a first resource related to the first target question option on the second interactive interface element in response to a trigger operation of the user on the target identifier.

6. The method according to claim 5, further comprising:
receiving a selection operation of the user on a second target question option from the at least one question option; and
updating, in response to the selection operation of the user on the second target question option from the at least one question option, the first resource displayed on the second interactive interface element to a second resource related to the second target question option, or displaying the second resource in an overlaid manner.

7. The method according to claim 6, wherein displaying the second resource in the overlaid manner comprises:
displaying a first sub-identifier and a second sub-identifier on the second interactive interface element, the first sub-identifier corresponding to the first target question option, and the second sub-identifier corresponding to the second target question option;
displaying the first resource on the second interactive interface element in response to the first sub-identifier being in a selected state; displaying the second resource on the second interactive interface element in response to a trigger operation of the user on the second sub-identifier;
displaying the second resource on the second interactive interface element in response to the second sub-identifier being in a selected state; and displaying the second resource on the second interactive interface element in response to a trigger operation of the user on the first sub-identifier.

8. The method according to claim 1, wherein the live streaming interface comprises a public screen area and a target area, the target area is located outside the public screen area, the target area displays a sent question option and an answer corresponding to the live streaming room that satisfy a preset condition, and the method further comprises:
displaying a third interactive interface element in response to a trigger operation of the user on the target area, all sent question options and answers corresponding to the live streaming room being displayed on the third interactive interface element.

9. The method according to claim 1, wherein sending the first target question option comprises:
sending the first target question option to a streamer end to display the first target question option and/or prompt information related to the first target question option at the streamer end.

10. An apparatus for live streaming interaction, comprising:
a display unit, configured to display a live streaming interface, the live streaming interface comprising a first control,
the display unit being further configured to display, in response to a trigger operation of a user on the first control, a first interactive interface element, the first interactive interface element displaying at least one question option; and
a sending unit, configured to send, in response to a selection operation of the user for a first target question option from the at least one question option, the first target question option.

11. An electronic device, wherein the device comprises a processor and a memory;
the memory is configured to store an instruction or a computer program; and
the processor is configured to execute the instruction or the computer program stored in the memory to cause the electronic device to perform the method according to any of claims 1 to 9.

12. A computer-readable storage medium, wherein the computer-readable storage medium has instructions stored therein, and the instructions, when running on a device, cause the device to perform the method according to any of claims 1 to 9.
